# DEMANDE DE BREVET EUROPEEN

(11) **EP 1 535 784 A1**
(43) Date de publication de la demande: **01.06.2005**
(21) Numéro de dépôt: 04292649.3
(22) Date de dépôt: 09.11.2004
(51) Int. Cl.: B60J 10/08

(54) **Joint de porte ou de fenêtre pour véhicule à réduire la transmission à l'habitacle des bruits de carosserie de basse fréquence**

(30) Priorité: 25.11.2003 FR 0313803
(71) Demandeur: Metzeler Automotive Profile Systems Transieres, 92000 Nanterre (FR)
(72) Inventeur: Dron, Bernard, 92800 Puteaux (FR)
(74) Mandataire: Jolly, Jean-Pierre

(57) **Abrégé**

Selon l'invention, en vue de faire varier suivant sa longueur la pression exercée par ce joint sur la porte ou la vitre et sur l'encadrement associé, pour réduire ainsi la transmission à l'habitacle des bruits de carrosserie de basse fréquence, la partie tubulaire (8) de ce joint comporte au moins une paroi dont l'épaisseur varie suivant la longueur du joint.

## Description

La présente invention concerne des joints de portes ou de fenêtres pour véhicules automobiles. Elle a plus précisément pour objet un joint de porte ou de fenêtre apte à réduire la transmission à l'habitacle du véhicule des bruits de basse fréquence, semblables à des bourdonnements, produits par la carrosserie du véhicule lorsque celui-ci se déplace.

On connaît bien, dans la technique, l'influence des joints de porte ou de fenêtre sur la transparence acoustique des automobiles, c'est-à-dire sur la différence existant entre le bruit extérieur produit par un véhicule roulant sur une chaussée et le bruit ressenti à l'intérieur de celui-ci.

En revanche, on ne semble pas avoir étudié en détail les effets de ces mêmes joints sur la transmission des vibrations des composants des carrosseries d'automobile entre lesquels ils sont interposés.

Ces joints ont généralement une partie de forme tubulaire, dont la section et l'épaisseur sont constantes suivant toute leur longueur et qui, de ce fait, appuie avec une force qui est sensiblement la même sur les parties du véhicule entre lesquels elle est comprimée, par exemple sur la porte du véhicule et l'encadrement de porte associé, ou sur la vitre et l'encadrement de vitre associé, et ceci quelle que soit la zone considérée de l'encadrement de vitre ou de porte. La plupart de ces joints ont, en coupe transversale, une épaisseur qui peut varier considérablement et de très nombreux joints de ce type ont été proposés dans la technique. En revanche, les variations d'épaisseur de ces joints tubulaires suivant leur longueur n'a pas fait l'objet d'études systématiques.

Or les études effectuées par la Demanderesse lui ont toutefois montré que les bruits de carrosserie de basse fréquence, c'est-à-dire de fréquence inférieure à environ 500 Hz, qui sont transmis à l'habitacle et ressentis par les passagers comme des bourdonnements, ont une intensité qui varie de façon très sensible suivant les zones de la carrosserie sur lesquelles les joints appuient traditionnellement. Ces variations d'intensité entre des zones différentes d'un encadrement de porte peuvent atteindre dans la pratique, dans la gamme des basses fréquences, 3 décibels, voire même 4 décibels, à une fréquence donnée.

En poursuivant ses études sur ce phénomène, la Demanderesse a établi qu'il est possible de remédier à cet inconvénient et d'atténuer considérablement les bourdonnements résultant de la transmission des bruits de carrosserie de basse fréquence à l'habitacle en faisant varier localement la pression exercée par la partie tubulaire du joint suivant sa longueur, en fonction de la position qu'occupent les différentes portions de ce joint sur l'encadrement de porte.

L'invention a par conséquent pour objet un joint pour encadrement de porte ou de vitre de véhicule automobile, ce joint étant usuellement réalisé par extrusion et comprenant au moins deux parties tubulaires attenantes destinées à être interposées entre l'encadrement et la porte ou la vitre associée, l'une de ces parties étant solidaire d'une partie du joint à section transversale en U qui est destinée à coiffer une partie saillante de l'encadrement, ce joint étant caractérisé en ce qu'en vue de faire varier suivant sa longueur la pression exercée par ce joint sur la porte ou la vitre et sur l'encadrement associé, pour réduire ainsi la transmission à l'habitacle des bruits de carrosserie de basse fréquence, la partie tubulaire attenante à la partie à section en U comporte au moins une paroi dont l'épaisseur varie, mais sans discontinuités marquées, suivant la longueur du joint.

On connaît certes, par US 4 619 077, un joint comprenant une partie de fixation à laquelle est attenante une partie tubulaire, ce joint étant constitué de premières et de secondes sections sensiblement rectilignes raccordées à des parties d'angle à petit rayon de courbure, et il est caractérisé en ce que la paroi de la partie tubulaire des secondes sections a une épaisseur plus grande que celle de la paroi de la partie tubulaire des premières sections, l'accroissement d'épaisseur était réalisé pendant l'extrusion du joint.

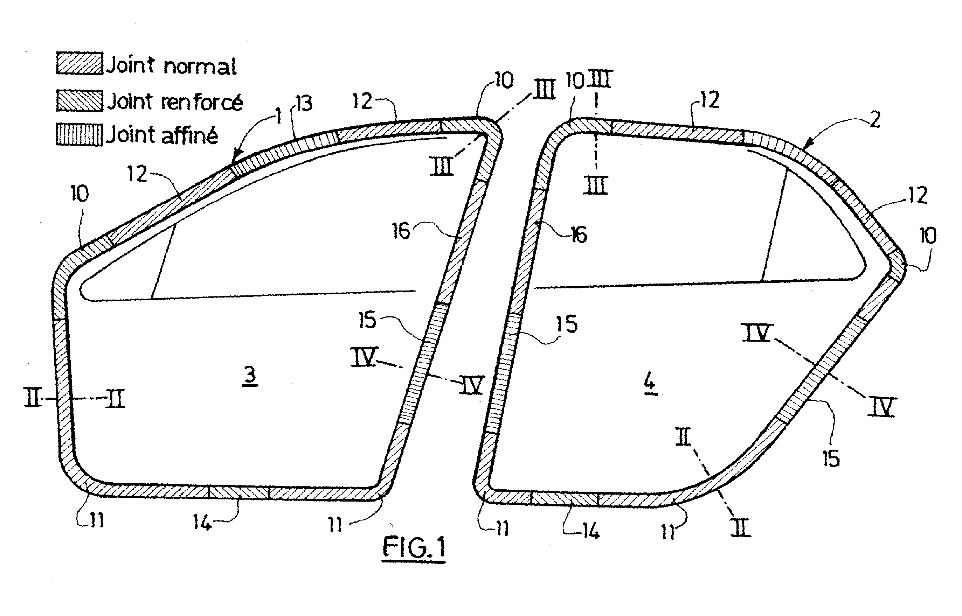

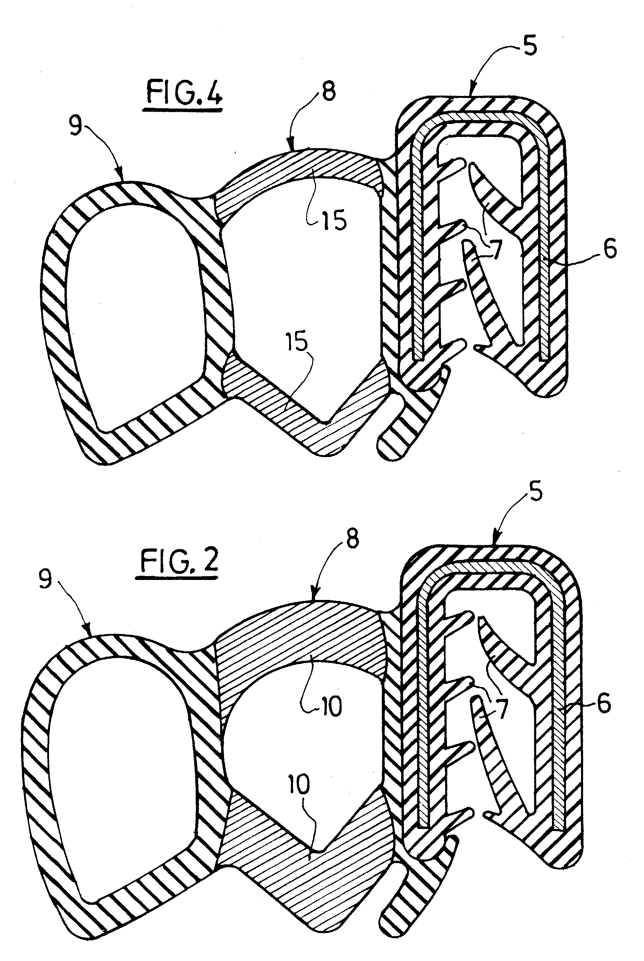

Si l'on se réfère toutefois à la description de ce brevet, on constate qu'il n'y a pas de variation en continu de l'épaisseur de la paroi de la partie, mais que cette épaisseur varie brusquement entre les différentes parties du joint pour rester ensuite constantes suivant toutes la longueur de ces parties, (voir les figures 2, 3 et 4, qui sont des coupes respectivement suivant les lignes II-II, III-III et IV-IV de la figure 1). Plus précisément, la partie tubulaire a une paroi d'épaisseur plus grande dans les parties incurvées, afin d'être moins déformée dans les angles de l'ouverture à laquelle elle est associée.

Le joint conforme à l'invention vise à un autre résultat.

En effet, comme il est bien connu dans la technique, il est possible de déterminer aisément la pression exercée par les joints de porte et de fenêtre sur les ouvrants et les encadrements, afin de modifier ainsi localement cette pression en adaptant la section et l'épaisseur du joint pour la réduire ou l'augmenter en conséquence, et ceci avec une précision satisfaisante. Conformément à l'invention, on peut ainsi modifier localement les contraintes exercées par le joint, le mode de vibration de la caisse et des portes du véhicule et la transmission de ces vibrations à l'habitacle de celui-ci.

C'est ainsi, par exemple que, dans le cas d'un joint pour encadrement de porte comportant une partie tubulaire :
- les portions de la partie tubulaire contiguës aux angles de la partie supérieure de la porte auront avantageusement une épaisseur supérieure à celle de la partie tubulaire d'un joint usuel du même type, cette épaisseur diminuant entre ces deux angles pour atteindre en une zone intermédiaire entre ceux-ci une épaisseur de préférence inférieure à celle de la partie tubulaire du joint usuel ;
- dans les deux angles de la partie inférieure de la porte, l'épaisseur de la partie tubulaire du joint sera de préférence sensiblement égale à celle de la partie tubulaire d'un joint usuel du même type, mais croîtra entre ces deux angles pour atteindre dans une zone intermédiaire entre ceux-ci une épaisseur supérieure à l'épaisseur de la partie tubulaire du joint usuel ;
- enfin, entre les deux angles supérieurs de la porte et les deux angles inférieurs, jusqu'à une zone intermédiaire entre eux, l'épaisseur de la partie tubulaire du joint diminue avantageusement pour atteindre celle de la partie tubulaire d'un joint usuel ou une épaisseur inférieure.

Dans le cas d'un joint comprenant deux parties tubulaires attenantes, dont l'une est solidaire d'une partie à section transversale en U formant pince, destinée à coiffer une partie saillante d'un ouvrant ou d'un encadrement de cet ouvrant, ce sont de préférence les dimensions de la partie tubulaire attenant à la partie formant pince qui sont modifiées et, plus particulièrement, ce que l'on appelle les "jambes" de cette partie tubulaire, c'est-à-dire les parties de celle-ci qui sont solidaires de la partie formant pince et de la seconde partie tubulaire.

C'est une telle forme de mise en oeuvre de l'invention qui sera décrite ci-après plus en détail, à titre d'exemple non limitatif, mais il est clair que l'invention n'est pas limitée aux joints de porte des véhicules automobiles et qu'elle s'applique également aux joints pour vitres latérales de ces véhicules, dont le mode de vibration peut ainsi être contrôlé, en améliorant considérablement la transparence acoustique, en particulier pour des fréquences au voisinage de 3 k Hz.

Comme indiqué ci-dessus, une forme de mise en oeuvre de l'invention va maintenant être décrite plus en détail, dans le cas de joints de porte de véhicules automobiles du type dit "bi-tubes", c'est-à-dire comprenant deux parties tubulaires attenantes latéralement entre elles, suivant leur longueur, et un profilé formant pince à section en U, dont une branche est solidaire de l'une de ces parties tubulaires.

Dans cette description, on se référera aux dessins annexés, sur lesquels :
La figure 1 est une vue schématique de deux joints selon l'invention, dans la position qu'ils occupent lorsqu'ils équipent respectivement l'encadrement d'une porte avant et celui d'une porte arrière d'une automobile ;
Les figures 2, 3 et 4, sont des coupes transversales de ces joints, respectivement suivant les lignes II-II, III-III et IV-IV de la figure 1 ;

Comme on le voit sur les dessins, les joints de porte 1 et 2 de cette forme de réalisation, qui équipent respectivement une porte avant 3 et une porte arrière 4 d'une automobile, simplement esquissées sur la figure 1, comprennent de façon bien connue :
- une partie 5 à section en U, destinée à coiffer en la pinçant une partie saillante d'un encadrement de porte ; cette partie 5, qui peut être en un élastomère ou un plastomère, peut comprendre une armature 6 à section en U et comporter sur les faces internes de ses branches des lèvres 7, destinées à éviter qu'elle ne se désolidarise accidentellement de la partie saillante qu'elle coiffe ;
- un premier profilé tubulaire 8, en une matière thermoplastique ou élastomérique, apte à se déformer élastiquement, qui est solidaire suivant toute sa longueur d'une branche de la partie 1 formant pince ;
- un second profilé tubulaire 9, également en une matière thermoplastique ou élastomérique et apte à se déformer élastiquement, qui est attenant au profilé 8 suivant toute sa longueur, du côté opposé à la pince 1.

La pince 1 et les profilés 8 et 9 sont de préférence venus de co-extrusion.

Les deux joints 1 et 2 représentés sur la figure 1 sont identiques dans leur principe.

Conformément à l'invention, l'un au moins des profilés tubulaires, ici le profilé intermédiaire 8, a une épaisseur de paroi qui varie suivant la position qu'il occupe sur l'encadrement de porte et qui est adaptée au mode souhaité de vibration de l'encadrement de porte et de la porte elle-même, de manière à réduire, voire même à supprimer, le bruit sourd de bourdonnement, transmis dans les basses fréquences à l'habitacle du véhicule.

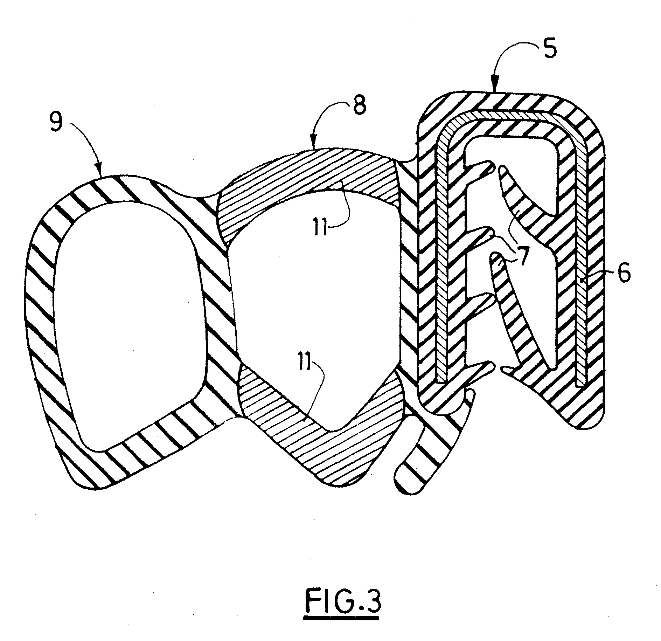

Dans ce but, comme représenté sur les dessins, les parties 10 des profilés tubulaires 8 situées dans les angles supérieurs des portes 3 et 4 (voire figure 2), ont une épaisseur supérieure à celle de la partie correspondante d'un joint du même type, d'épaisseur uniforme suivant toute sa longueur, tandis que les mêmes parties des profilés tubulaires 8 situées dans les angles inférieurs et référencées alors 11 ont une épaisseur sensiblement égale à celle de la même partie des joints usuels (voir figure 3).

Entre les parties 10 des joints 1 et 2 situées dans les angles supérieurs des encadrements de porte, l'épaisseur de la partie tubulaire 8 diminue pour devenir d'abord sensiblement égale, dans les parties contiguës référencées 12, à celle d'un joint usuel, et diminue ensuite encore dans la partie 13 intermédiaire entre les parties 12.

Entre les parties 11 des joints 1 et 2 situées dans les angles inférieurs des encadrements de porte, au contraire, la partie tubulaire 8 est renforcée en 14 par accroissement de son épaisseur.

Enfin, à partir des angles supérieurs des encadrements de porte en descendant vers les angles inférieurs, l'épaisseur de la partie tubulaire 8 des joints diminue pour être égale à celle d'un joint normal pour la partie avant de l'encadrement de la porte 3 et être même inférieure à celle d'un joint normal, en 15, au voisinage des parties 11, ces parties 15 se raccordant aux parties 10 voisines par des parties 16 d'épaisseur égale à celle d'un joint normal.

Bien entendu, l'invention s'applique aussi à des joints de porte ou de fenêtres comprenant un unique profilé tubulaire, voire même, surtout pour les fenêtres, une unique lèvre.

Comme il a été indiqué ci-dessus, les variations optimales d'épaisseur peuvent être calculées à partir de mesures de vibrations, de préférence sur banc à rouleaux, et la réalisation des joints conformes à l'invention ne pose donc aucun problème aux spécialistes de la technique.

## Revendications

1. Joint pour encadrement de porte ou de vitre de véhicule automobile, ce joint étant usuellement réalisé par extrusion et comprenant au moins deux parties tubulaires attenantes (8, 9) destinées à être interposées entre l'encadrement et la porte ou la vitre associée, l'une (8) de ces parties étant solidaire d'une partie (5) du joint à section transversale en U qui est destinée à coiffer une partie saillante de l'encadrement, ce joint étant **caractérisé en ce qu'**en vue de faire varier suivant sa longueur la pression exercée par ce joint sur la porte ou la vitre et sur l'encadrement associé, pour réduire ainsi la transmission à l'habitacle des bruits de carrosserie de basse fréquence, la partie tubulaire (8) attenante à la partie (5) à section en U comporte au moins une paroi dont l'épaisseur varie, mais sans discontinuités marquées suivant la longueur du joint.

2. Joint selon la revendication 1, dans lequel la partie tubulaire (8) attenante à la partie formant pince (5) est définie par des parties dites jambes réunissant la partie formant pince et la seconde partie tubulaire (9), **caractérisé en ce que** l'épaisseur des jambes (10, 11, 15) varie suivant la longueur du joint.

3. Joint selon l'une des revendications 1 et 2, **caractérisé en ce que** :
- les portions (12) de la partie tubulaire (8) contiguës aux angles de la partie supérieure de la porte ont une épaisseur supérieure à celle de la partie tubulaire d'un joint usuel du même type, cette épaisseur diminuant entre ces deux angles pour atteindre en une zone intermédiaire (13) entre ceux-ci une épaisseur de préférence inférieure à celle de la partie tubulaire du joint usuel ;
- dans les deux angles de la partie inférieure de la porte, l'épaisseur de la partie tubulaire du joint ( en 11) est sensiblement égale à celle de la partie tubulaire d'un joint usuel du même type, mais croîtra entre ces deux angles pour atteindre (en 14) dans une zone intermédiaire entre ceux-ci une épaisseur supérieure à l'épaisseur de la partie tubulaire du joint usuel ;
- enfin, entre les deux angles supérieurs de la porte et les deux angles inférieurs, jusqu'à une zone intermédiaire entre eux, l'épaisseur de la partie tubulaire du joint diminue avantageusement pour atteindre celle de la partie tubulaire d'un joint usuel (en 16) ou une épaisseur inférieure (en 15).
